# EUROPEAN PATENT APPLICATION

(11) **EP 4 390 768 A1**
(43) Date of publication of application: **26.06.2024**
(21) Application number: 23212797.7
(22) Date of filing: 28.11.2023
(51) Int. Cl.: G06N 3/0464, G06N 3/063

(54) **IMPLEMENTING NEURAL NETWORKS IN HARDWARE**

(30) Priority: 22.12.2022 GB 202219518
(71) Applicant: Imagination Technologies Limited, Kings Langley, Hertfordshire WD4 8LZ (GB)
(72) Inventor: HUANG, Xiran, Kings Langley, Hertfordshire, WD4 8LZ (GB)
(74) Representative: CMS Cameron McKenna Nabarro Olswang LLP

(57) **Abstract**

Methods of implementing a neural network in hardware are described. The neural network comprises a plurality of layers and the layers are grouped into a plurality of layer groups, each layer group comprising one or more layers of the neural network that are processed in a single pass through the hardware. The layer groups are grouped into a plurality of tile groups, each tile group comprising a set of layer groups that are evaluated when executing the neural network. The method comprises pre-fetching a portion of the input data for a first layer group in a tile group into a buffer slot in on-chip memory; and subsequently releasing the buffer slot after output data for the first layer group has been written to memory.

## Description

### Cross-reference to Related Application

This application claims priority from UK patent application 2219518.4 filed on 22 December 2022, which is herein incorporated by reference in its entirety.

### Background

Many neural networks (NN) comprise an input layer, an output layer and multiple hidden layers, e.g. convolutional NN. Some NN have more than one input and/or output layer. At run time, a layer in a NN typically takes an array of input data and applies an array of weights to generate an array of output data. For layers other than an output layer, the output data from the layer forms the input data for a subsequent layer in the NN. This may be the next layer in the NN and/or a later layer in the NN e.g. dependent upon the NN structure and whether there is any branching. For an input layer, the input data is the input data to the NN and for an output layer, the output data is the output data from the NN.

For each layer in the NN, the array of weights (or coefficients) is computed in advance (e.g. as part of a training stage, since they remain unchanged during the execution of the NN) and stored in memory so that they can be used at run time. The array of weights may be a multi-dimensional array of weights and the input data may be a multi-dimensional array of data. The reading of input data and weights and the writing of output data results in very large memory bandwidths being used and this is exacerbated where the same data (be it input data or weights) is read from memory (and in particular off-chip memory) multiple times.

The embodiments described below are provided by way of example only and are not limiting of implementations which solve any or all of the disadvantages of known methods of mapping neural networks to hardware and handling input data and output data of a neural network.

### Summary

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

Methods of implementing a neural network in hardware are described. The neural network comprises a plurality of layers and the layers are grouped into a plurality of layer groups, each layer group comprising one or more layers of the neural network that are processed in a single pass through the hardware. The layer groups are grouped into a plurality of tile groups, each tile group comprising a set of layer groups that are evaluated when executing the neural network. The method comprises pre-fetching a portion of the input data for a first layer group in a tile group into a buffer slot in on-chip memory; and subsequently releasing the buffer slot after output data for the first layer group has been written to memory.

A first aspect provides a method for implementing a neural network in hardware, the neural network comprising a plurality of layers, wherein the layers are grouped into a plurality of layer groups, each layer group comprising one or more layers of the neural network that are processed in a single pass through the hardware and the layer groups are grouped into a plurality of tile groups, each tile group comprising a set of layer groups that are evaluated when executing the neural network, the method comprising: pre-fetching a portion of the input data for a first layer group in a tile group into a buffer slot in on-chip memory; and subsequently releasing the buffer slot after output data for the first layer group has been written to memory.

The pre-fetching may be performed selectively, wherein pre-fetching of the input data for the first layer group in the tile group is performed if implementing the neural network would result in the input data for the first layer group in the tile group being read from the off-chip memory a requisite number of times and the requisite number of times is equal to or more than a threshold number of times. The buffer slot may be subsequently released after the input data for the first layer group in the tile group has been read the requisite number of times.

The portion of the input data may be pre-fetched prior to execution of the first layer group.

The pre-fetching of the portion of the input data may start prior to execution of the first layer group and may finish during execution of the first layer group.

The portion of the input data may be pre-fetched during execution of a layer group preceding the first layer group.

The layer preceding the first layer group may be a last layer group in a preceding tile group.

The input data for the first layer group may be subdivided into a plurality of blocks, the portion of the input data may comprise a first block and may be pre-fetched prior to execution of the first layer group.

The input data for the first layer group may be subdivided into a plurality of blocks, the portion of the input data may comprise a first block and may be pre-fetched during execution of a layer group preceding the first layer group.

The method may further comprise: pre-fetching a second block of the input data for the first layer group in the tile group into a second buffer slot in on-chip memory, wherein the second block is prefetched prior to execution of the first layer group for the second block of the input data; and subsequently releasing the second buffer slot after output data for the first layer group and the second block of the input data has been written to memory.

The method may further comprise: pre-fetching a second block of the input data for the first layer group in the tile group into a second buffer slot in on-chip memory, wherein the second block is prefetched during execution of a layer group in the tile group for the first block of the input data; and subsequently releasing the second buffer slot after output data for the first layer group and the second block of the input data has been written to memory.

The input data for the first layer group may be subdivided into a plurality of blocks, the portion of the input data may comprise a second or subsequent block of the plurality of blocks and the portion of the input data may be pre-fetched prior to execution of the first layer group with the portion of the input data.

The input data for the first layer group may be subdivided into a plurality of blocks, the portion of the input data may comprise a second or subsequent block of the plurality of blocks and the portion of the input data may be pre-fetched during execution of a layer group in the tile group for a preceding block of the plurality of blocks.

The hardware may comprise one or more cores and the input data for the first layer group may be subdivided into a plurality of blocks, wherein the portion of the input data comprises a first block for each of the cores and is pre-fetched prior to execution of the first layer group.

The hardware may comprise one or more cores and input data for the first layer group may be subdivided into a plurality of blocks, wherein the portion of the input data comprises a first block for each of the cores and is pre-fetched during execution of a layer group preceding the first layer group.

The method may further comprise: pre-fetching a second block of the input data for each of the plurality of cores for the first layer group in the tile group into a second buffer slot in on-chip memory, wherein the second block for each of the plurality of cores is prefetched prior to execution of the first layer group for the second block of the input data for each of the plurality of cores; and subsequently releasing the second buffer slot after output data for the first layer group and the second blocks of the input data has been written to memory.

The method may further comprise: pre-fetching a second block of the input data for each of the plurality of cores for the first layer group in the tile group into a second buffer slot in on-chip memory, wherein the second block for each of the plurality of cores is prefetched during execution of a layer group in the tile group for the first blocks of the input data; and subsequently releasing the second buffer slot after output data for the first layer group and the second blocks of the input data has been written to memory.

The hardware may comprise a plurality of cores and input data for the first layer group may be subdivided into a plurality of blocks, the portion of the input data may comprise a second or subsequent block of the plurality of blocks for each of the plurality of cores and the portion of the input data may be pre-fetched prior to execution of the first layer group with the portion of the input data.

The hardware may comprise a plurality of cores and input data for the first layer group may be subdivided into a plurality of blocks, the portion of the input data may comprise a second or subsequent block of the plurality of blocks for each of the plurality of cores and the portion of the input data may be pre-fetched during execution of a layer group in the tile group for a preceding block of the plurality of blocks.

A second aspect provides a neural network accelerator configured to implement a neural network in hardware, the neural network comprising a plurality of layers, wherein the layers are grouped into a plurality of layer groups, each layer group comprising one or more layers of the neural network that are processed in a single pass through the hardware and the layer groups are grouped into a plurality of tile groups, each tile group comprising a set of layer groups that are evaluated when executing the neural network, the neural network accelerator comprising: on-chip memory; hardware logic arranged to pre-fetch a portion of the input data for a first layer group in a tile group into a buffer slot in the on-chip memory; and hardware logic arranged to subsequently release the buffer slot after output data for the first layer group has been written to memory.

The neural network accelerator may be embodied in hardware on an integrated circuit. There may be provided a method of manufacturing, at an integrated circuit manufacturing system, a neural network accelerator. There may be provided an integrated circuit definition dataset that, when processed in an integrated circuit manufacturing system, configures the system to manufacture a neural network accelerator. There may be provided a non-transitory computer readable storage medium having stored thereon a computer readable description of an integrated circuit that, when processed, causes a layout processing system to generate a circuit layout description used in an integrated circuit manufacturing system to manufacture a neural network accelerator.

There may be provided an integrated circuit manufacturing system comprising: a non-transitory computer readable storage medium having stored thereon a computer readable integrated circuit description that describes the neural network accelerator; a layout processing system configured to process the integrated circuit description so as to generate a circuit layout description of an integrated circuit embodying the neural network accelerator; and an integrated circuit generation system configured to manufacture the neural network accelerator according to the circuit layout description.

There may be provided computer program code for performing any of the methods described herein. There may be provided non-transitory computer readable storage medium having stored thereon computer readable instructions that, when executed at a computer system, cause the computer system to perform any of the methods described herein.

The above features may be combined as appropriate, as would be apparent to a skilled person, and may be combined with any of the aspects of the examples described herein.

### Brief Description of the Drawings

Examples will now be described in detail with reference to the accompanying drawings in which:
FIGs. 1-3 are schematic diagrams showing the processing of data by a neural network;
FIGs. 4A-D, 5, 6, 7A, 7B and 8-11 are schematic diagrams showing pre-fetching of input data when executing a neural network;
FIGs. 12A and 12B show two example arrangements of layer groups within a neural network;
FIG. 13 is a flow diagram of a first example method of mapping a NN to hardware where pre-fetching of input-data is used selectively;
FIG. 14 is a flow diagram of a second example method of mapping a NN to hardware where pre-fetching of input-data is used selectively;
FIG. 15 shows a further example arrangement of layer groups within a neural network;
FIG. 16 shows a computer system in which the methods described herein may be implemented; and
FIG. 17 shows an integrated circuit manufacturing system for generating an integrated circuit embodying neural network hardware that implements pre-fetching.

The accompanying drawings illustrate various examples. The skilled person will appreciate that the illustrated element boundaries (e.g., boxes, groups of boxes, or other shapes) in the drawings represent one example of the boundaries. It may be that in some examples, one element may be designed as multiple elements or that multiple elements may be designed as one element. Common reference numerals are used throughout the figures, where appropriate, to indicate similar features.

### Detailed Description

The following description is presented by way of example to enable a person skilled in the art to make and use the invention. The present invention is not limited to the embodiments described herein and various modifications to the disclosed embodiments will be apparent to those skilled in the art.

Embodiments will now be described by way of example only.

As described above, the memory bandwidth required to read and write data and weights when using a NN can be very large and various techniques have been developed to make the hardware more efficient.

To reduce the size of memory that is required to store the weights and the bandwidth used to read the weights from memory, the weights may be stored in compressed form and then decompressed prior to use. The compression may be performed in an offline process. Furthermore, where the weights need to be read from memory multiple times (e.g. because the entire input data set cannot be processed in parallel), the weights may be read into on-chip memory as accessing this is quicker than off-chip memory (because of lower latency and/or higher bandwidth) and consumes less power; however, the size of on-chip memory is typically much more limited than off-chip memory. Off-chip memory may also be referred to as external memory. This may be implemented as DDR (double data rate) SDRAM and so any reference to DDR in the following description is referring to off-chip (or external) memory.

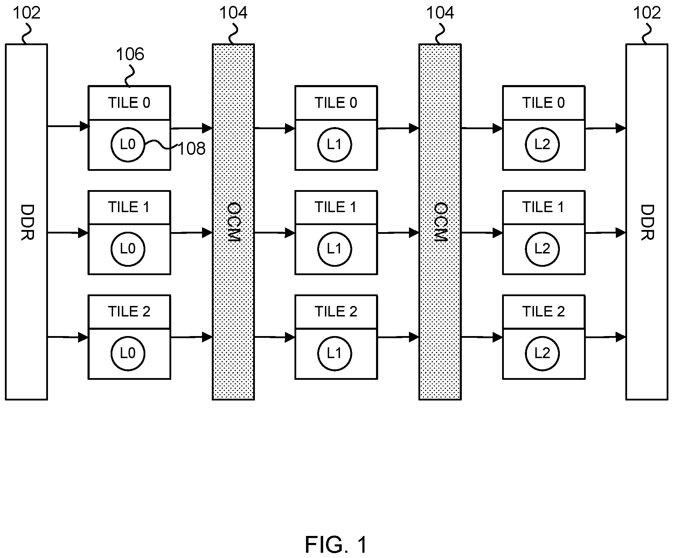

To reduce the size of the hardware required to process large input data sets (including the size of the memory required to store the output data from layers other than the output layer), the input data may be divided into blocks (also referred to as `tiles'). These blocks of data may be processed in a depth-wise manner through a plurality of layers of the NN, as shown graphically in FIG. 1. The term 'depth-wise' refers to the fact that, for a single core implementation, a tile (e.g. tile 0, 106) is processed through multiple layers before the next tile is processed. In the example shown in FIG. 1, a tile is processed through all the layers L0-L2 (where the layers 108 are shown in FIG. 1 by circles) before the next tile is processed. Where the hardware comprises multiple cores, each core may process a different tile and these tiles are processed by the cores in parallel but a core processes a tile through a plurality of layers (e.g. all layers) before processing a next tile. The input data for each tile is read from off-chip memory 102 and the output data, from the final layer (L2) is written back to the off-chip memory 102, whereas the intermediate data, in tiles, (which comprises output data from the layers except from the last layer and forms input data to the layers except from the first layer) is written to and read from on-chip memory (OCM) 104.

The input data may be arranged as a number, p, of planes of data, each plane having a width x and a height y. In addition to tiling, the input data may be split into a plurality of passes for processing, for example, to satisfy restrictions on hardware buffer size (e.g. in a neural network accelerator) and this can be performed in a number of different ways. Four examples are Y-splits, X-splits, F-splits and C-splits (which may also be referred to as P-splits). These splits are within a layer and a layer may be split in any one or more of these ways. Where Y-splits are used, the input data is split in the y-dimension such that each pass comprises a plurality of rows of input data. This is particularly efficient, in terms of memory access, if the input data is stored row-first (i.e. ordered according to the x-dimension). Where X-splits are used, the input data is split in the x-dimension such that each pass comprises a plurality of columns of input data. For C-splits, the input data is split by channel of the input data, such that each pass comprises one or more planes of input data. For F-splits, the input data is split across the output dimension and so each pass only produces some channels of output data. The output tensor is only complete once all passes have been performed. Where F-splits are used, the input data has to be read more than once (e.g. once per pass) because the splits are on the output data rather than the input data.

In some implementations the data may be stored row-first and a number of planes, np, may be grouped together and stored in the same X position. Consequently, if np=4, for each row (and where there are 4(N+1) planes in total arranged in N+1 groups of 4 planes):
Y0: X0 (P0, P1, P2, P3), X1 (P0, P1, P2, P3)... XN (P0, P1, P2, P3)
Y1: X0 (P0, P1, P2, P3), X1 (P0, P1, P2, P3)... XN (P0, P1, P2, P3)
Where P-splits or F-splits are used, the split is relative to the number of planes in each group, np. For example, the number of planes in each P-split or F-split is a multiple of the number of planes in each group, np.

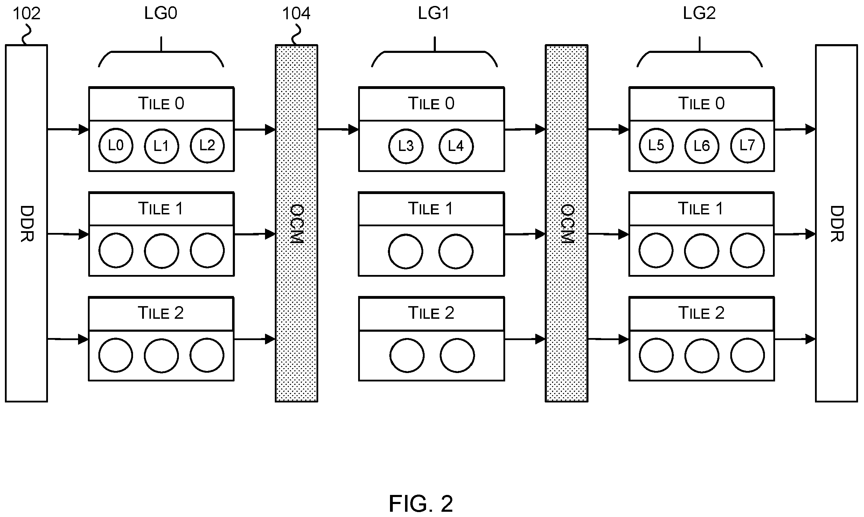

In some hardware implementations, multiple layers may be processed in a single hardware pass (i.e. a single pass through the hardware) with data being written to the on-chip memory at the end of the hardware pass (rather than between each layer), leading to the concept of a `layer group'. A layer group may comprise a single layer, as in the example shown in FIG. 1 (where each layer group comprises a single layer) or may comprise more than one layer and different layer groups may comprise different numbers of layers, as in the example shown in FIG. 2. In the example shown in FIG. 2, the first and third layer groups (LG0 and LG2) each comprise three layers (layers L0-L2 and L5-L7 respectively) whereas the second layer group (LG1) comprises only two layers (layers L3 and L4). In a similar manner to the example in FIG. 1, the tiles are processed depth-wise through a plurality of layer groups. The input data for each tile is read from off-chip memory 102 and the output data, from the final layer group (LG2) is written back to the off-chip memory 102, whereas the intermediate data, in tiles, (which comprises output data from the layer groups except from the last layer group and forms input data to the layer groups except from the first layer group) is written to and read from on-chip memory (OCM) 104. Within a layer group, the data is not written to memory (either on-chip or off-chip) because the layers within a layer group are processed in a single hardware pass.

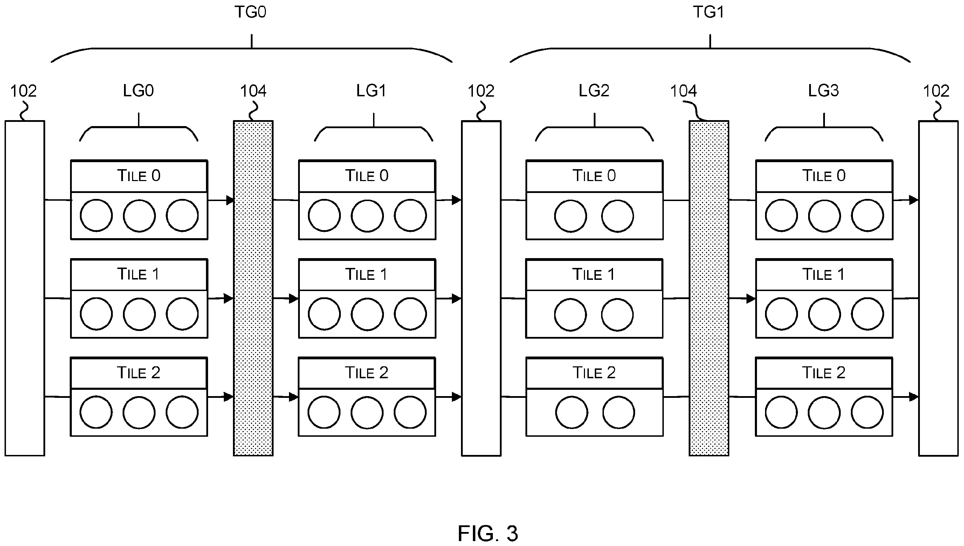

In the example shown in FIG. 2, all layer groups are evaluated depth-first together, after splitting the data into tiles with a tile being processed by a core through all layer groups before the core processes another tile. Output data for the tile is only written to the off-chip memory following evaluation of the last layer group (LG2). However in other examples, as shown in FIG. 3, the layer groups may be arranged into `tile groups'. A tile group is a set of the layer groups that are evaluated depth-first together, after splitting the data into tiles and in the example shown in FIG. 3, the first tile group, TG0, comprises two layer groups, LG0 and LG1 and the second tile group, TG1, comprises a further two layer groups, LG2 and LG3. Within a tile group, intermediate data, in tiles, is written to and read from on-chip memory 104, whereas input data for a tile group (irrespective of whether it is the first or a subsequent tile group) is read from off-chip memory 102 and output data for a tile group is written to off-chip memory 102. All tiles are processed through the tile group before the next tile is processed.

Although in the example of FIG. 3, each tile group operates on the same number of tiles (3 tiles), where tile groups are used, different numbers of tiles may be used for different tile groups and the number of tiles may be chosen based on the size of the input data to the tile group and the size of the OCM 104. The number of tiles may also be dependent upon the particular layers within the tile group as this will affect the amount of intermediate data that needs to be stored in the OCM 104.

The grouping of layer groups (and hence layers) into tile groups may be performed dependent upon the structure of the NN, e.g. whether there are any branches, and generally there may be a preference to group as many layer groups (and hence layers) together as possible, subject to the size of the on-chip memory 104, since the on-chip memory 104 needs to be able to store the intermediate data for the tile group. For NN structures which are more complex (e.g. they involve branching and/or each layer does not depend only upon the output of the preceding layer), there are more criteria to consider when defining tile groups, including memory access requirements. For example, it may be advantageous to reduce the amount of data written to off-chip memory at the output of one tile group that is then subsequently read more than once by subsequent tile groups. As a result, layer groups may be merged into a subsequent tile group to avoid having to read from the off-chip memory more than once if the size of the on-chip memory 104 can accommodate the output data from the layer group being merged into the tile group (and which is now intermediate data that is stored in the OCM 104 rather than the off-chip memory 102).

The grouping of layer groups (and hence layers) into tile groups is performed when mapping a NN to hardware, i.e. to a specific hardware arrangement which includes details of the number of cores, the size of the OCM, etc. As a NN may be executed on multiple different hardware arrangements, this mapping may be performed many times for the same NN. When grouping layer groups (and hence layers) into tile groups, the analysis is performed from the output working backwards towards the input, i.e. in the opposite direction to the execution order. This means that the analysis determines whether to merge a layer group that precedes a tile group (in execution order) into the subsequent tile group, such that if merged, the newly merged layer group would then be the first layer group in the tile group (in terms of execution order). It will be appreciated that the newly merged layer group may not remain at the front of the tile group if a further layer group is subsequently merged into the tile group.

Described herein are methods for further improving the efficiency of NN hardware, through the reduction in memory bandwidth used. The methods described herein involve pre-fetching of input data from the off-chip memory 102 into the on-chip memory 104. Where pre-fetching is used, the input data is not read by the NN layer from the off-chip memory 102 (as shown in the examples in FIGs. 1-3) but instead the input data is read from the on-chip memory 104. In various examples, pre-fetching of the input data is performed (e.g. is always performed) if the input data is read equal to or more than a threshold number of times from the off-chip memory and this threshold may be set at two, but pre-fetching is not performed if the input data is read less than the threshold number of times from the off-chip memory. In other examples, pre-fetching may always be performed; however, as pre-fetching adds latency for the first layer in the NN or tile group (where used), it may be more efficient to use pre-fetching selectively (e.g. based on the number of times input data would otherwise be read from off-chip memory). The latency for prefetch any first tile cannot be hidden, as either it is the first layer of the NN, or for subsequent layers, the input data is produced by the prior layer (or layer group). For all the other tiles the latency of the pre-fetch can be hidden.

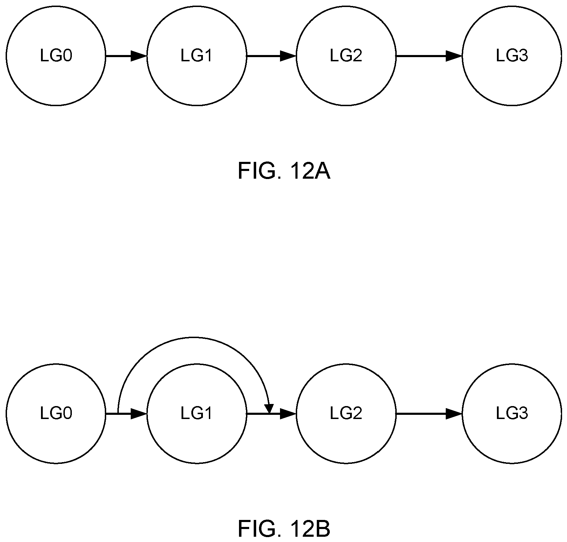

There are many different reasons why input data may be read more than once from the off-chip memory 104. One example is where F-splits are used in the input layer group of the tile group and another is example is as a result of branching (e.g. as described below with reference to FIG. 12B).

The use of pre-fetching, as described herein, introduces an additional constraint to methods of grouping layer groups (and hence layers) into tile groups, i.e. an additional constraint that is taken into consideration when determining whether a layer group can be merged into a subsequent tile group. Existing constraints relate to the size of the output data, because layer groups can only be merged into a tile group if the on-chip memory 104 has sufficient space to store the data output by the layer group (e.g. referring to the example shown in FIG. 3, the OCM 104 must be large enough to store the data output by LG0 in order for LG0 to be merged into a tile group with LG1). However, the additional constraint that is introduced by the introduction of pre-fetching, as described herein, relates to the size of the input data for a layer group.

If the pre-fetching conditions are met (e.g. the threshold is met or exceeded) then pre-fetching is performed. Pre-fetching can only be performed if there is sufficient space in the on-chip memory 104 to store the input data. Where the input data set is tiled, the space required in the OCM for storing the pre-fetched data does not correspond to the entire input data set but only to the particular tile to be processed by the first layer group in the tile group (or the first layer group overall, where tile groups are not used). The OCM usage is therefore determined by the size of the largest tile. If there is insufficient space in the OCM to store the pre-fetched input data for the layer group, then that layer group cannot be merged into the subsequent tile group (e.g. referring to FIG. 3, if there is insufficient space in the OCM 104 to pre-fetch the input data for LG1 - assuming that LG1 meets the criteria such that pre-fetching is required - then LG1 cannot be merged into TG1 and must remain in TG0).

Where pre-fetching is to be performed, the space required in the on-chip memory 104 for the pre-fetched data is pre-allocated to the pre-fetched data; however, when assessing whether a further, preceding, layer group can be merged into a tile group, that pre-allocation is not taken into consideration (i.e. the analysis assumes that the pre-allocation has not taken place) since if the further layer group is merged into the start of the tile group, the pre-allocation will no longer be required since the layer group to which it related is no longer the first layer group in the tile group (and hence will not need to be pre-fetched). If a further layer group is merged, the pre-allocation is released and depending upon whether the new first layer group in the tile group is to be pre-fetched, a new pre-allocation may be made. This is described in more detail with reference to the examples below.

In various examples, the OCM 104 may be subdivided into a plurality of sections, with different sections being used to store different types of data. For example, the OCM 104 may comprise a section that is dedicated to storing the coefficient data (rather than the input data) and this may be referred to as coefficient memory. When evaluating the constraints to determine whether a layer group can be merged into a subsequent tile group, the relevant size of the OCM 104 is the size of the section(s) that can store the pre-fetched data and intermediate data. In various examples, the OCM 104 may comprise a first section, referred to as swap memory, for storing disposable data and a second section, referred to as heap memory, for storing non-disposable data (e.g. input data that relates to more than one tile of output data). In such an example, the pre-allocation may be made in the first section, the swap memory, as the pre-fetched data is only required for a short period of time and can be discarded (and overwritten) once the particular tile has finished processing by the particular tile group (e.g. when processing LG0 followed by LG1 then LG2, when processing LG2, the output of LG0 can be overwritten) or as soon as it has been read the requisite number of times (which as described above may be two or more, where the threshold is set at two), which may be earlier than when the particular tile has finished processing. The synchronisation of the pre-fetching, the processing of tiles and/or the discarding of data may be implemented using broadcast messages. For example, at the end of a pass or layer, a message may be broadcast to all cores in the system and this may trigger the discarding of pre-fetched data. In addition, or instead, a pass or the processing of a layer may be triggered by a broadcast message.

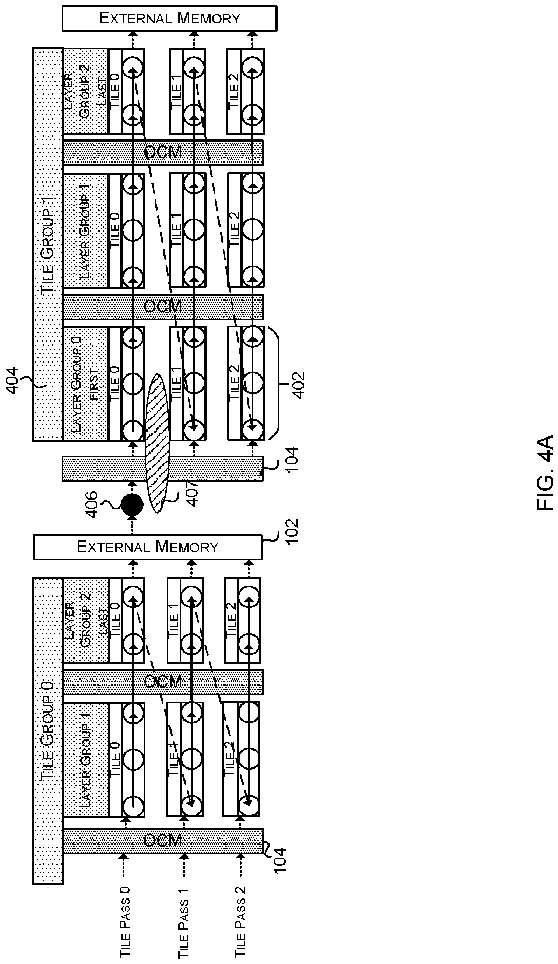

Four example pre-fetching methods can be described with reference to FIGs. 4A-D. Each example method shows a single core implementation of a multi-tile tile group, i.e. only one tile is processed in each pass (as indicated by the arrows that show the order in which the tiles and layers / layer groups are processed) and the input data is divided into multiple tiles. Whilst the methods are described in relation to a particular tile group, TG1, it will be appreciated that this is by way of example only and the methods may be applicable to any tile group.

In the example shown in FIG. 4A, pre-fetching is performed right before the first layer group, LG0 402, in a tile group (e.g. the second tile group, TG1, 404 in the example shown). Pre-fetching for the first tile, tile 0, of the first layer group, LG0 402, of the second tile group, TG1 404, occurs before execution of the tile group, as indicated by the solid circle 406. This pre-fetch introduces additional latency which cannot be hidden without introducing significant complexity (as described below).

In a variation of the method shown in FIG. 4A, whilst pre-fetching is started right before the first layer group, LG0 402, the processing of the layer group may start before the pre-fetching is complete, as indicated by the dashed ellipse 407. This reduces the latency of this method significantly.

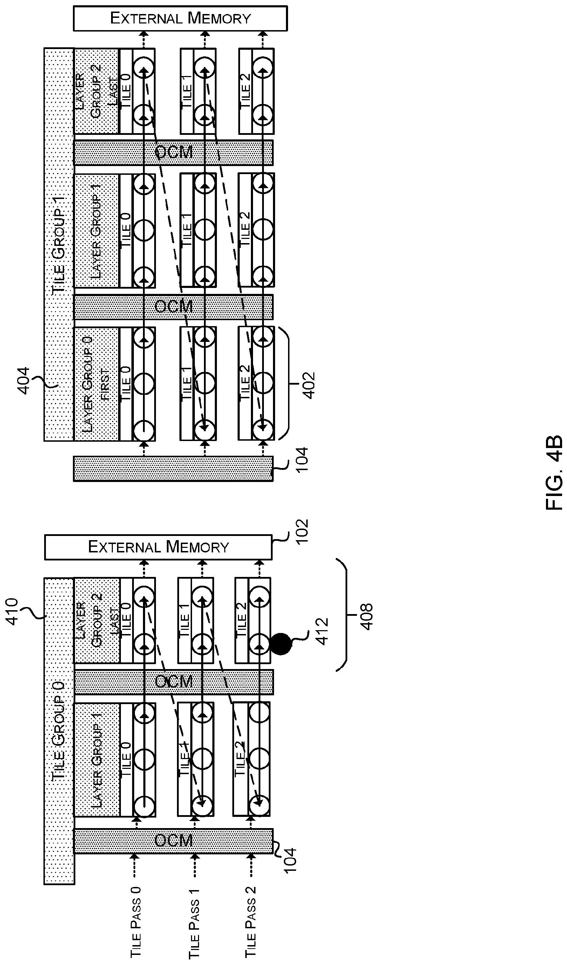

In the example shown in FIG. 4B, pre-fetching for the first tile, tile 0, is performed one layer group (and one tile group) ahead, i.e. during the last layer group of the previous tile group. FIG. 4B shows pre-fetching for the first layer group, LG0 402, in the second tile group, TG1, 404 (like in FIG. 4A); however in this method, the pre-fetching occurs during the processing of the last layer group, LG2 408, in the preceding tile group, TG0 410, as indicated by the solid circle 412. By pre-fetching a layer group ahead (e.g. using the method of FIG. 4B), the latency for the first pass (which is present in the method of FIG. 4A) can be hidden; however this does require a larger requirement for cross-tile-group OCM allocation (i.e. the pre-fetched data needs to be stored in an OCM during the execution of one tile group and accessed during execution of the subsequent tile group). Pre-fetching a layer group ahead can only be performed where the last tile pass in the previous tile group does not constrain any data that is consumed by (i.e. used in) the first tile pass of the next tile group.

As the example methods in FIGs. 4A and 4B are described with reference to pre-fetching for the second tile group, TG1, 404, the previous tile group, TG0 is not shown in full (i.e. layer group 0 is not shown).

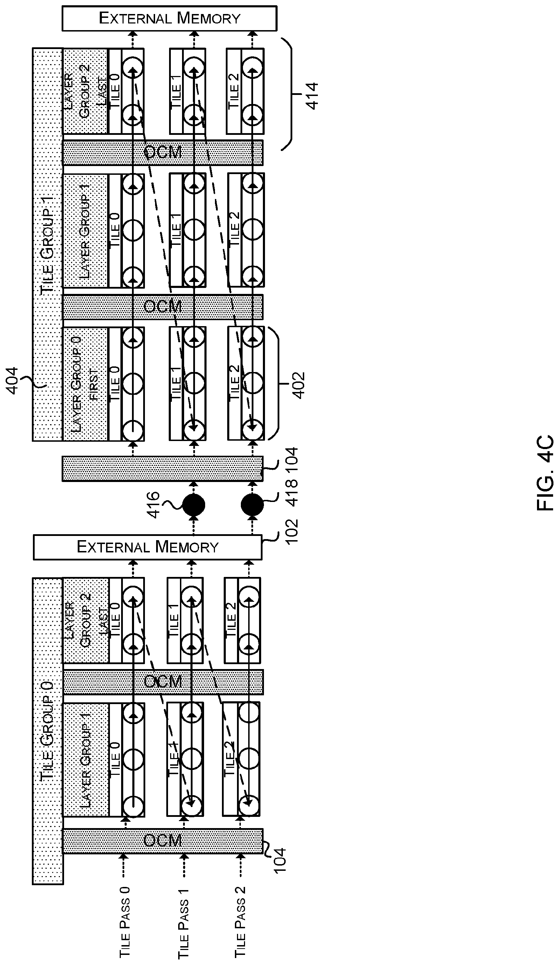

In the example shown in FIG. 4C, pre-fetching is performed right before a first layer group (e.g. LG0 402) in a tile group (e.g. TG1 404) on a per-tile (or per-tile pass) basis. Pre-fetching for a tile, e.g. tile 1, occurs after processing of the previous tile pass, e.g. tile pass 0, as indicated by the solid circle 416. Similarly, pre-fetching for a next tile (e.g. tile 2) occurs after processing of the previous tile pass (e.g. tile pass 1) as indicated by the solid circle 418.

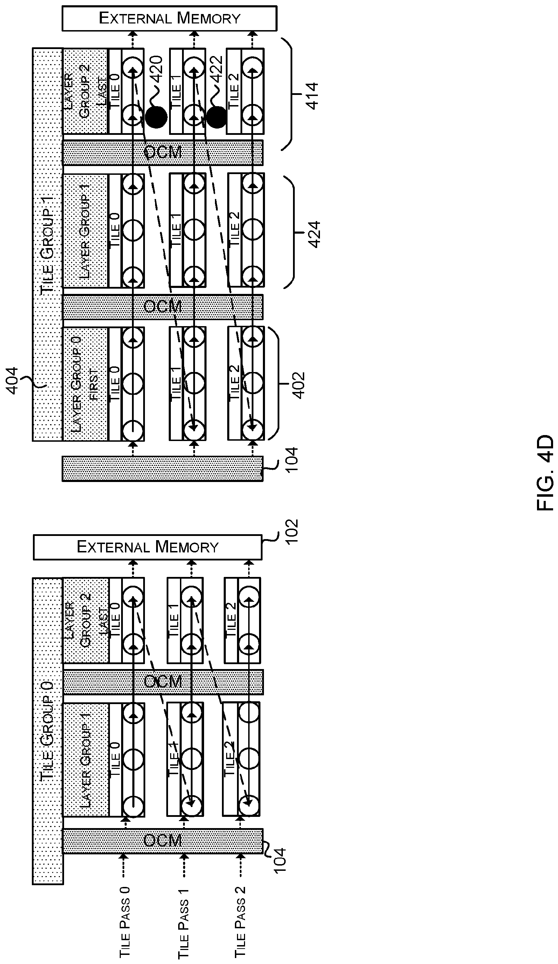

In the example shown in FIG. 4D, pre-fetching of the tiles is performed one layer group ahead within the same tile group and on a per-tile (or per-tile pass) basis. FIG. 4D shows pre-fetching for the second tile, tile 1, during processing of the previous tile (tile 0) by the last layer group, LG2 414, in the current tile group, TG1 404, as indicated by the solid circle 420, i.e. the pre-fetching for a tile pass is performed near the end of the previous tile pass. Similarly, pre-fetching for the next tile (e.g. tile 2) occurs during processing of the immediately previous tile, tile 1, by the last layer group, LG2 414, in the current tile group, TG1 404, as indicated by the solid circle 422. By pre-fetching a layer group ahead (e.g. using the method of FIG. 4D), the latency for subsequent tile passes (which is present in the method of FIG. 4C) can be hidden; however this does require there to be sufficient space in the OCM.

In a variation on that shown in FIG. 4D, the pre-fetching may be performed more than one layer group ahead within the same tile group, e.g. two layer groups ahead such that the pre-fetching occurs during processing of the previous tile through the penultimate layer group in the tile group (e.g. LG1 424 in FIG. 4D), i.e. such that pre-fetching for a tile pass is performed earlier in the previous tile pass. However, by shifting the pre-fetching earlier, it increases the lifespan of the pre-fetch buffer (within the OCM) and overall requires more OCM space. By pre-fetching only one layer group ahead, as shown in FIG. 4D, the latency is hidden and the OCM space that is used is reduced.

The methods described above and shown in FIGs. 4A-D (or their variations as described above) can be used in various combinations. For example, the first method (or the variant that involves pre-fetching and processing in parallel) may be used in combination with either the third method (e.g. a combination of the methods of FIGs. 4A and 4C), the fourth method (e.g. a combination of the methods of FIGs. 4A and 4D), or its variant that involves pre-fetching more than one layer group ahead. In other examples, the second method may be used in combination with either the third method (e.g. a combination of the methods of FIGs. 4B and 4C), the fourth method (e.g. a combination of the methods of FIGs. 4B and 4D), or its variant that involves pre-fetching more than one layer group ahead. These combinations have the effect that for a first tile pass through the first layer group in a tile group, the method of either FIG. 4A or FIG. 4B may be used and for subsequent tile passes the method of either FIG. 4C or FIG. 4D is used.

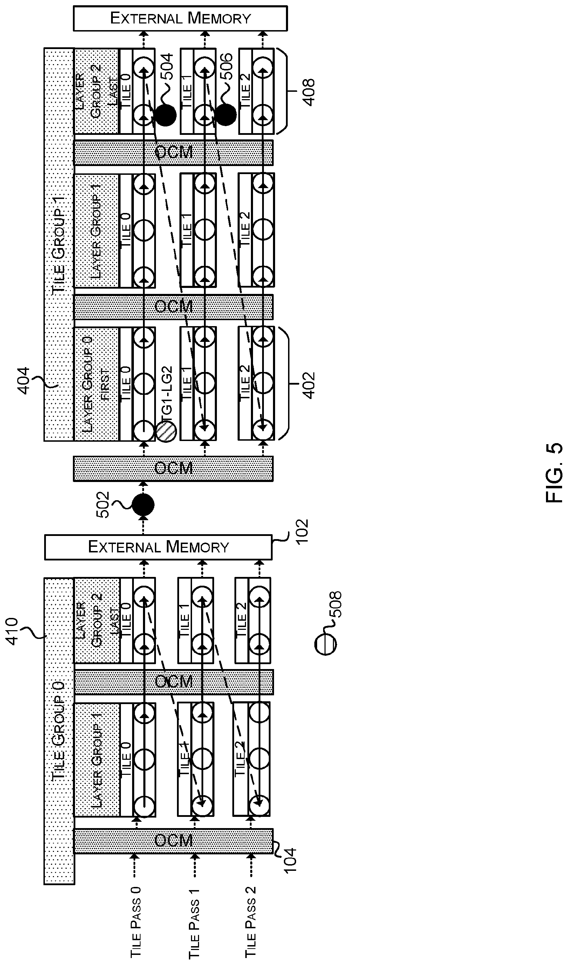

FIG. 5 shows a further pre-fetching example which is a combination of the first and fourth methods shown in FIGs. 4A and 4D and described above. In a similar manner to the example methods shown in FIGs. 4A and 4B, in FIG. 5, TG0 is not shown in full (i.e. layer group 0 is not shown). Pre-fetching for the first tile, tile 0, of the first layer group, LG0 402, of the second tile group, TG1 404, occurs before execution of the tile group, as indicated by the first solid circle 502. This pre-fetch introduces additional latency which cannot be hidden without introducing significant complexity (as described below). The pre-fetching for the other tiles, tile 1 and tile 2, occurs during the processing of the preceding tile and in the example shown it is performed during the processing of the preceding tile by the last layer group in the tile group, LG2 408, as indicated by the second and third circles 504, 506 respectively. The pre-fetching for tiles 1 and 2 therefore does not introduce any latency.

As noted above, the pre-fetch for the first tile, tile 0, of the first layer group, LG0 402, introduces additional latency which cannot be hidden without introducing significant complexity. In order to hide the latency, the pre-fetch would need to be performed in the previous tile group, e.g. as indicated by the shaded circle 508 (resulting in a combination of the methods of FIGs. 4B and 4D, rather than FIG. 4A and 4D), and as described above this would introduce cross-tile-group OCM allocation (because space would be required in the OCM for the pre-fetched data for TG1 at the same time storing the output data from LG1 of TG0) and would only be possible if the last tile in the previous tile group did not constrain any data that needed to be pre-fetched.

Whilst the method of FIG. 5 shows pre-fetching before the execution of the tile group (circle 502), it will be appreciated that the pre-fetching may be performed before and during execution of the first layer group (as described above as a variant of the method of FIG. 4A).

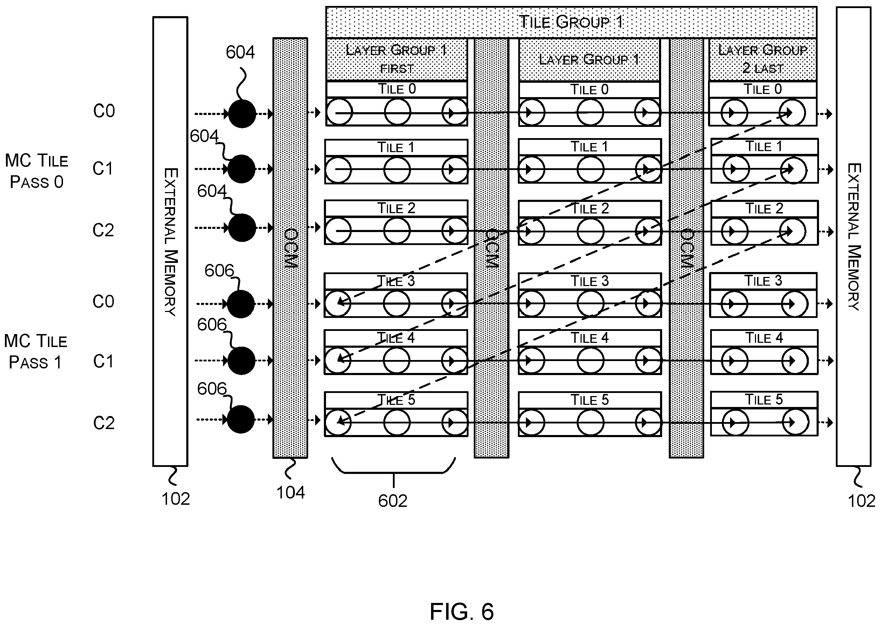

A further pre-fetching example can be described with reference to FIG. 6. The arrangement in FIG. 6 shows input pre-fetching for a multi-tile tile group in a multi-core implementation and is a combination of the first and third methods shown in FIGs. 4A and 4C and described above. In multi-core implementations, there may be both shared on-chip memory (S-OCM) which is accessible (in terms of reads and writes) by all of the cores and local on-chip memory (L-OCM) which is only accessible by a particular core. Consequently, whether the pre-fetched data needs to be accessed by more than one core, affects the evaluation of constraints to determine whether to merge a layer group into a tile group and the determination whether there is sufficient space in the OCM to perform pre-fetching.

In the example shown in FIG. 6 there are three cores, C0-C2, such that three tiles can be processed in each multi-core (MC) tile pass (tiles 0-2 in the first MC tile pass, MC tile pass 0, and tiles 3-5 in the second MC tile pass, MC tile pass 1). Each multi-core tile pass therefore comprises one tile pass for each core and the data for all the tiles in a multi-core tile pass are pre-fetched in parallel, as indicated by the solid circles 604, 606, i.e. before the particular multi-core tile pass (and in particular before the first layer group, LG0 602, in the tile group), and one pre-fetched, the pre-fetched data is stored. The pre-fetched data may be stored in the local OCM for each core as there is more space and larger bandwidth compared to the shared OCM.

Whilst the multi-core implementation shown in FIG. 6 uses a combination of the first and third methods shown in FIGs. 4A and 4C and described above, it will be appreciated that any of the other methods, or combinations of methods, as described above, could be used in a multi-core implementation. For example, in a variation of that shown in FIG. 6, pre-fetching may only be performed before subsequent tile passes (e.g. tile pass 1, circles 606) and not before the first tile pass (tile pass 0, i.e. circles 604 are omitted). In such a variant, the third method shown in FIG. 4C is being used independently of the first method shown in FIG. 4A. In another example, pre-fetching for the second multi-core tile pass (MC tile pass 1) may be performed near the end of the previous multi-core tile pass (MC tile pass 0) using a combination of the methods shown in FIGs. 4A and 4D (i.e. circles 606 are omitted and replaced by circles occurring during MC tile pass 0). As described above with respect to the single-core implementation, fetching during the previous multi-core tile pass requires there to be sufficient available space in the OCM (e.g. in the local OCM).

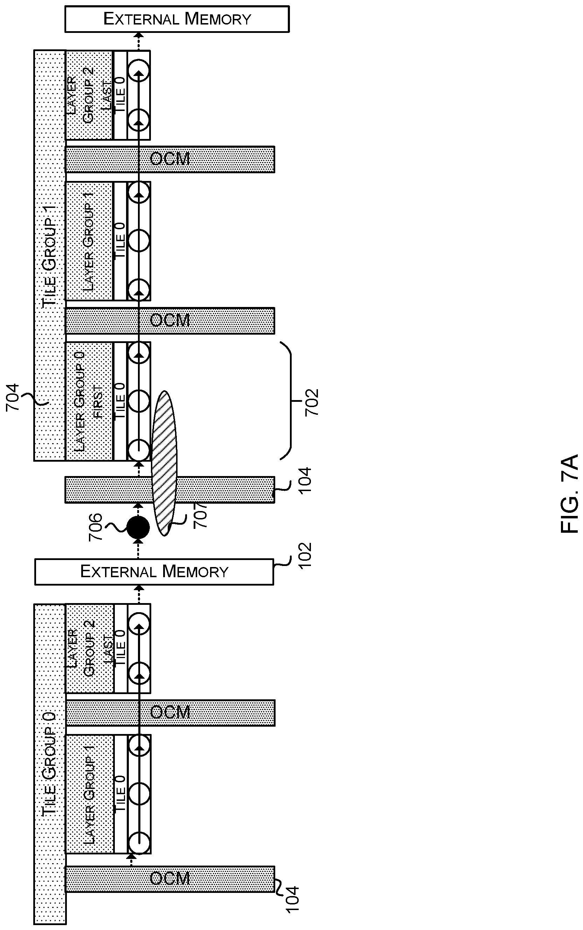

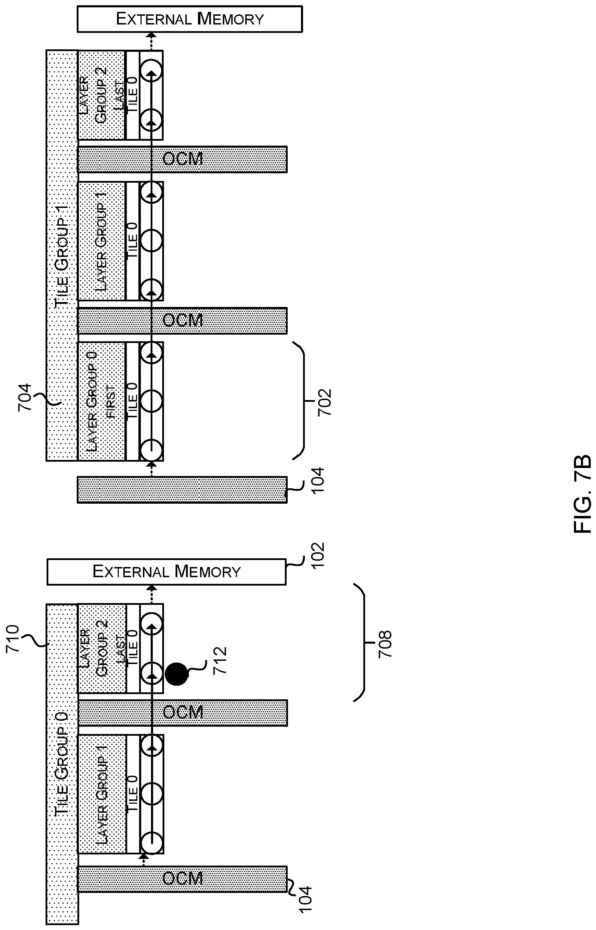

Two further example pre-fetching methods can be described with reference to FIGs. 7A and 7B. Each example method shows a single core implementation of a single-tile tile group and these correspond to the multi-tile tile group methods shown in FIGs. 4A and 4B, but with only a single tile and hence a single tile pass. Whilst the methods are described in relation to a particular tile group, TG1, it will be appreciated that this is by way of example only and the methods may be applicable to any tile group.

In the example shown in FIG. 7A, pre-fetching is performed right before the first layer group, LG0 702, in a tile group (e.g. the second tile group, TG1, 704 in the example shown). Pre-fetching for the tile, tile 0, of the first layer group, LG0 702, of the second tile group, TG1 704, occurs before execution of the tile group, as indicated by the solid circle 706. This pre-fetch introduces additional latency which cannot be hidden without introducing significant complexity (as described below).

In a variation of the method shown in FIG. 7A, whilst pre-fetching is started right before the first layer group, LG0 702, the processing of the layer group may start before the pre-fetching is complete, as indicated by the dashed ellipse 707. This reduces the latency of this method significantly. In order to implement this pre-fetching in parallel with the processing of tile 0, a memory locking technique may be used to synchronise between the hardware block that performs the pre-fetch and the hardware block that reads the input data. This synchronisation ensures that there is no attempt to read data from the OCM before it has been pre-fetched.

In the example shown in FIG. 7B, pre-fetching for the tile is performed one layer group (and one tile group) ahead, i.e. during the last layer group of the previous tile group. FIG. 7B shows pre-fetching for the first layer group, LG0 702, in the second tile group, TG1, 704 (like in FIG. 7A); however in this method, the pre-fetching occurs during the processing of the last layer group, LG2 708, in the preceding tile group, TG0 710, as indicated by the solid circle 712. By pre-fetching a layer group ahead (e.g. using the method of FIG. 7B), the latency for the first pass (which is present in the method of FIG. 7A) can be hidden; however this does require a larger requirement for cross-tile-group OCM allocation (i.e. the pre-fetched data needs to be stored in an OCM during the execution of one tile group and accessed during execution of the subsequent tile group). Pre-fetching a layer group ahead can only be performed where the previous tile group does not constrain any data that is consumed by (i.e. used in) the next tile group. This is true for both multi-tile tile groups and single-tile tile groups.

As the example methods in FIGs. 7A and 7B are described with reference to pre-fetching for the second tile group, TG1, 704, the previous tile group, TG0 is not shown in full (i.e. layer group 0 is not shown).

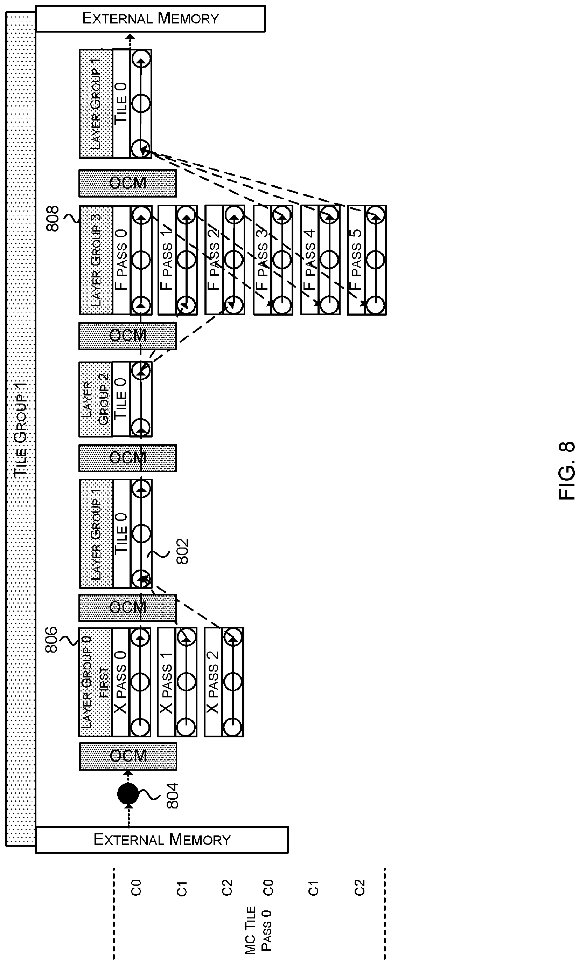

A further pre-fetching example can be described with reference to FIG. 8. The arrangement in FIG. 8 shows input pre-fetching for a single-tile tile group in a multi-core implementation and uses the method shown in FIG. 7A and described above. As there is only a single tile (tile 0 802), all the input data set (i.e. the entire input tensor) is required to be pre-fetched and in most instances it is stored in the shared OCM that is accessible to all cores. A shown in FIG. 8, the input tensor may be split in different ways for different layer groups (e.g. X-splits in layer group 0 806 and F-splits in layer group 3 808) and this is possible because there is no implicit data dependency between neighbouring layer groups. The pre-fetching occurs before execution of the tile group, as indicated by the first solid circle 804. This pre-fetch introduces additional latency which cannot be hidden.

Whilst the example in FIG. 8 shows a multi-core implementation, a single core implementation would operate in a very similar manner, except that the passes could not be performed in parallel on different cores when processing the first and fourth layer groups, LG0 806 and LG3 808, but would instead be performed in series (i.e. Xpass0 followed by Xpass1 followed by Xpass2 for LG0).

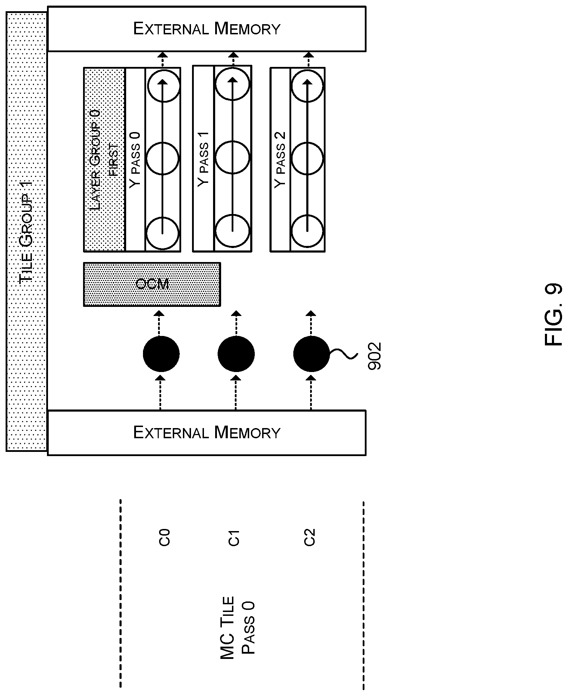

Another pre-fetching example can be described with reference to FIG. 9. The arrangement in FIG. 9 shows input pre-fetching for a single layer group single-tile tile group in a multi-core implementation. In this example, the input data is split into passes according to Y-splits (as described above) and as a result, the relevant input data for each pass can be pre-fetched into the local OCM of the core that is to process that pass. In the example shown in FIG. 9, the pre-fetching occurs before execution of the tile group (circles 902), using the method of FIG. 7A (as described above) and so the latency that it introduces cannot be hidden.

Compared to the example shown in FIG. 8, the latency of the example shown in FIG. 9 is smaller since the entire input tensor is not read into the shared OCM, but instead it is subdivided according to Y-splits, one portion of input data per core, and each portion of the input data pre-fetched into the corresponding local OCM with the overlapping part between each Y pass being read into the shared OCM.

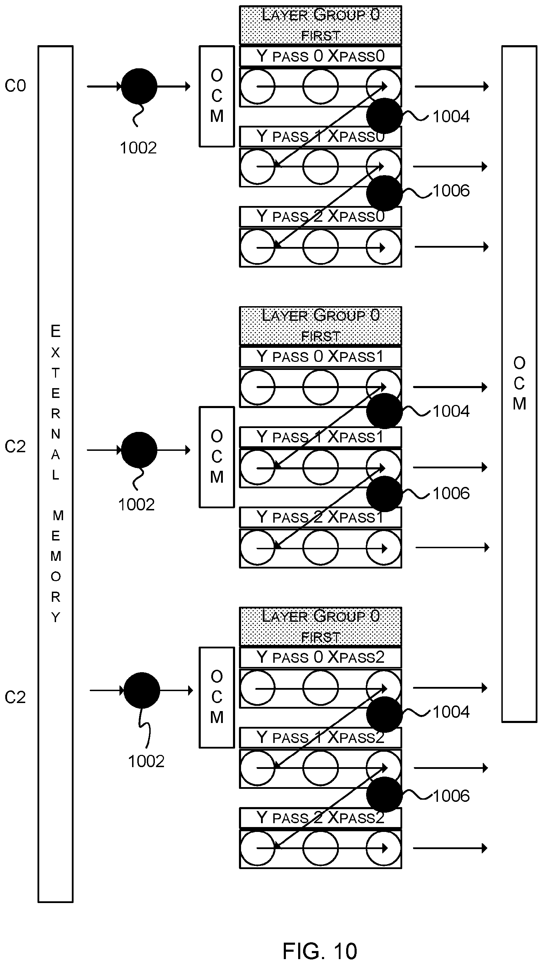

Where the input data is stored row-first, it possible to apply Y-splits on top of any other split within each core of a multi-core implementation and this may, for example, be used to reduce the amount of pre-fetched data and hence the latency, e.g. if applied to the example shown in FIG. 8. FIG. 10 shows the first layer group only of an implementation of a single-tile tile group in a multi-core implementation, similar to that shown in FIG. 8 where Y-splits have been applied on top of the existing X-splits. As shown in FIG. 10, the input data for each X-pass is further split in the y-dimension and then pre-fetching is only performed on a per-Y-split basis for each core, with the pre-fetched data being stored in local OCM. The pre-fetching of the first Y-split (as indicated by the solid circles 1002) is performed before the start of processing of the layer group (in a similar manner to the method of FIG. 7A) and hence the latency cannot be hidden, whereas the pre-fetching of subsequent Y-splits of each X-pass (as indicated by the solid circles 1004, 1006) can be performed during processing of the preceding Y-split (in a similar manner to the method of FIG. 7B.

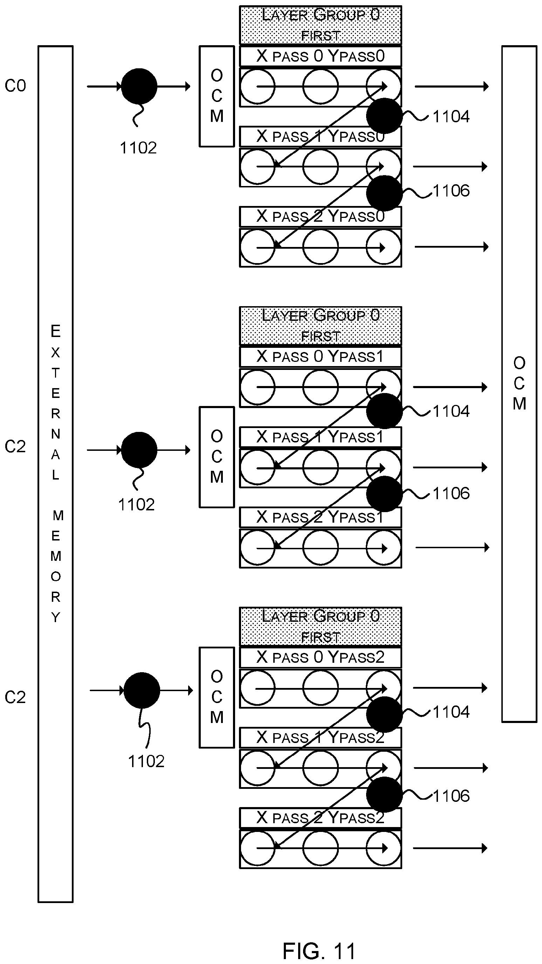

In the method shown in FIG. 10, each core operates on a separate X-pass at the same time, such that the first core, C0, performs the first X-pass, Xpass0, whilst the second core, C1, performs the second X-pass, Xpass1 and the third core, C2, performs the third X-pass, Xpass2. In a variation of that shown in FIG. 10, all cores could process the same X-pass before moving onto the next X-pass, as shown in FIG. 11.

Where Y-splits are applied on top of existing splits (e.g. on top of existing X-splits in the example of FIGs. 10 and 11 or any other type of split), then the number of splits is not determined by the number of cores (since all the splits are performed by the same core) but by the available on-chip memory size at this layer (e.g. all reusable space that has not been used by the later layer groups in the tile group). This split size is not propagated to any subsequent layer group as it relates to input pre-fetch only.

Whilst only in some of the examples described above (e.g. the methods shown in FIGs. 4B, 4D, 5, 7B, 7D, 10 and 11) can the latency of some of the pre-fetch operations be hidden, use of pre-fetching as shown reduces the bandwidth used where the input data (that is pre-fetched) is read more than once. By using pre-fetching, the data is read once from the external memory and then for all subsequent reads, the data is read from the on-chip memory.

As shown in the examples described above, the methods described herein may be applied to both single-core and multi-core hardware.

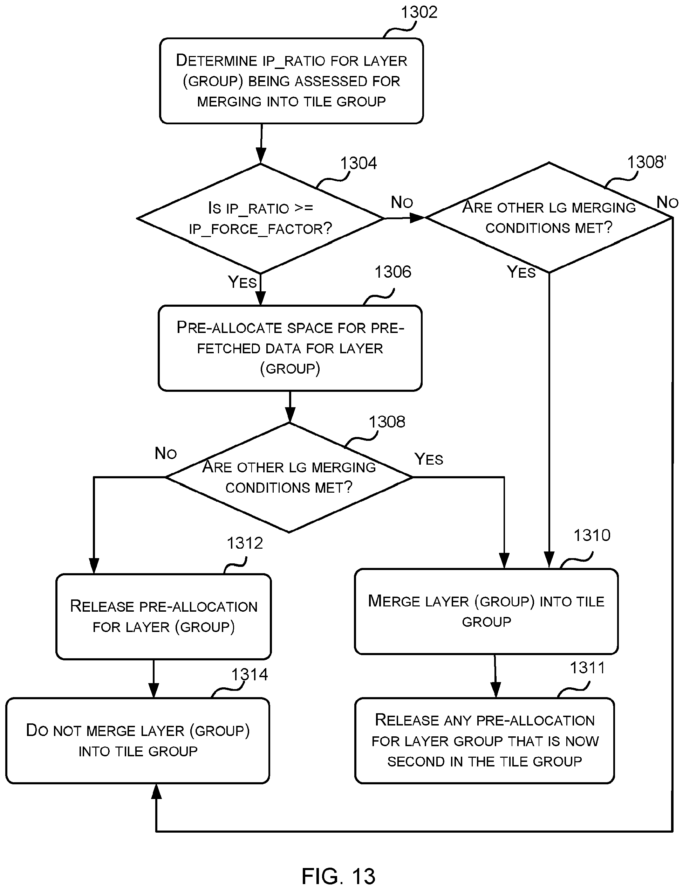

FIG. 13 shows a flow diagram of an example method of mapping a NN to hardware where pre-fetching (i.e. input pre-fetching) is used selectively and which can be described with reference to FIGs. 12A and 12B. FIG. 12A shows a first arrangement of layer groups within a NN in which there is no branching, whereas FIG. 12B shows a second arrangement of layer groups within a NN which involves branching. The branching in the arrangement shown in FIG. 12B means that the output from the first layer group, LG0, is read twice from memory. It is read once as the input to the second layer group, LG1, and it is read again as an input to the third layer group, LG2. Whilst FIG. 12B shows branching, it will be appreciated that there will be scenarios where input data is read multiple times without the use of branching (e.g. where F-splits are used).

The determination of whether to perform pre-fetching in the method of FIG. 13 is based on two parameters: an Input Prefetch Ratio (IP_ratio) and an Input Prefetch Force Factor (IP_force_factor). The Input Prefetch Ratio (IP_ratio) is a computed variable that depends upon the mapper result per layer group. The mapper result per layer group corresponds to the number of times the same input is read from memory (whether that be on-chip or off-chip memory) for a particular layer group and may differ between layer groups. Referring to the example shown in FIG. 2B, if LG2 and LG3 have already been grouped into a tile group and the method of FIG. 13 is being used to determine whether to merge LG1 into that same tile group, the Input Prefetch Ratio for LG1 is two. The Input Prefetch Force Factor is the threshold mentioned above and which may be set to two.

As shown in FIG. 13, the method of mapping a NN to hardware and in particular the method of determining whether to merge a layer group into a tile group, comprises determining the Input Prefetch Ration for the layer group being assessed for merging into the tile group (block 1302). As described above, a layer group may comprise one or more layers and so this assessment may be performed for a single layer or for a group of layers that are implemented together in a single hardware pass.

If the Input Prefetch Ratio is not less than (i.e. it is equal to or exceeds) the Input Prefetch Force Factor, then pre-fetching is required (`Yes' in block 1304) and this is taken into consideration when generating tile groups (i.e. when determining whether to merge a layer group into a tile group). As pre-fetching is required, the space for the pre-fetched data is pre-allocated (block 1306) and the method proceeds to determine whether one or more other criteria for merging the layer group are met (block 1308). These other (non-pre-fetch-related) merging conditions may, for example, relate to whether there is sufficient space to store the output data from the layer group in the on-chip memory. If these other merging conditions are met (`Yes' in block 1308), the layer group is merged into the tile group (block 1310) and any pre-allocation for the layer group that is now second in the tile group (as a consequence of the merging) is released (block 1311). The method may then be repeated to assess the next layer group (in the opposite order of execution). Referring to the example shown in FIG. 12B, having analysed LG1 and if it is determined that LG1 can be merged into the tile group with LG2 and LG3, then the next layer group to be analysed is LG0 and any pre-allocation associated with LG2 is released.

If the other criteria for merging the layer group into the tile group are not met ('No' in block 1308), then the pre-allocation for that layer (as pre-allocated in block 1306) is released (block 1312) and the layer group is not merged into the tile group (block 1314). The allocation that is released (in block 1312) in response to the merging conditions not being met is not the same as the allocation that is released (in block 1310) in response to the merging of a layer group (in block 1311). The allocation that is released (in block 1312) in response to the merging conditions not being met only refers to the pre-allocation that was made immediately prior to the decision point (in block 1306) for the particular layer being assessed.

If the Input Prefetch Ratio is not less than (i.e. it is equal to or exceeds) the Input Prefetch Force Factor ('No' in block 1304), then pre-fetching is not required (block 1306 is omitted) but the layer group is still tested based in relation to the other merging criteria (in block 1308' which corresponds to block 108 described above) to determine whether to merge the layer group (in block 1310) or not (in block 1314). If merging is not performed, then the method may be repeated for any other input layer groups if there are multiple input layer groups (e.g. in a branch) until no more input layer groups can be merged and once all input layer groups have been considered, the method may be repeated for a next tile group. Referring to the example shown in FIG. 12B, having analysed LG1 and if it is determined that LG1 cannot be merged into the tile group with LG2 and LG3, then LG0 may be analysed to determine whether it can be merged into a tile group with LG1.

When determining whether the other (non-pre-fetch-related) criteria for merging are met (in blocks 1308 and 1308'), any pre-allocation for pre-fetched data for any layer group other than the one currently being assessed (i.e. any pre-allocation other than the one made immediately prior to the assessment) is ignored. As described above, this can be ignored because if the layer group currently being assessed is merged, then the allocation will not be required because it will relate to a layer group that is no longer the first layer group in the tile group and hence its input data does not need to be pre-fetched. Referring to the example shown in FIG. 12B, when analysing LG1, any pre-allocation for LG2 (the current first layer group in the tile group) is ignored when assessing whether the other (non-pre-fetch-related) criteria for merging are met (in blocks 1308 and 1308').

It will be appreciated that whilst the method of FIG. 13 shows pre-fetching being performed if the IP_ratio is equal to or exceeds the IP_force_factor, in other examples, the IP_force_factor may be defined differently such that pre-fetching is performed only when the I P_ratio exceeds the I P_force_factor.

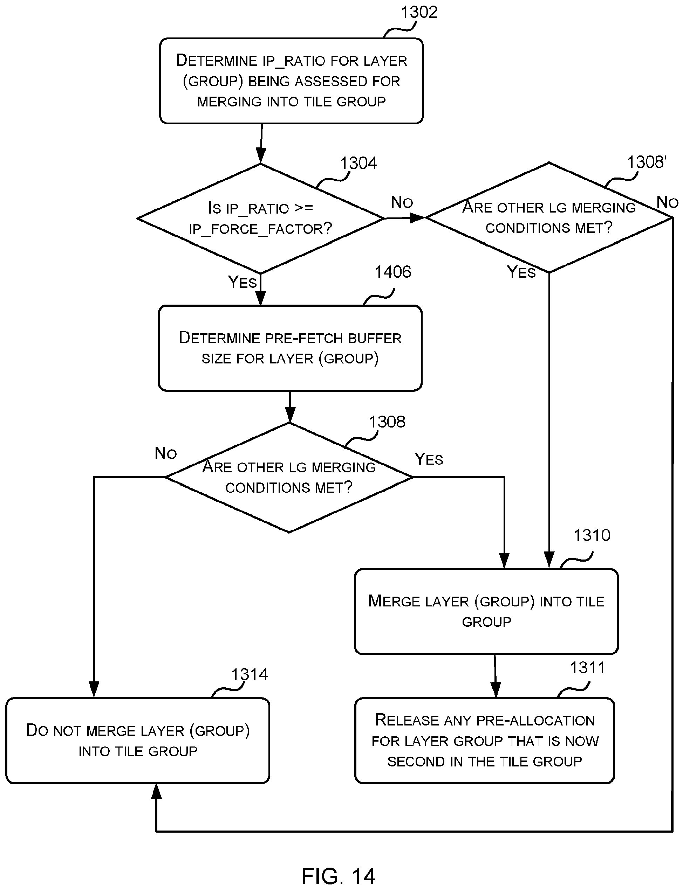

Whilst FIG. 13 shows pre-allocation (in block 1306) before the subsequent testing based on other layer group merging conditions (in block 1308), in a variation on that shown in FIG. 13, the pre-fetching may not actually be performed but instead the size of the pre-fetched data may be determined, i.e. the size of the pre-fetch buffer for the particular layer group is determined (block 1406). This pre-fetch buffer size is then taken into consideration when assessing the other layer group merging conditions (in block 1308). The evaluation of the other merging conditions (in block 1308) may involve the sizes of various other buffers, such as the SWAP buffer, HEAP buffer, coefficient buffer and/or ACCUM buffer. As the pre-fetch buffer is not actually allocated in the method shown in FIG. 14, the allocation does not need to be released if the other merging conditions are not met ('No' in block 1308), i.e. block 1312 of FIG. 13 is omitted from the method of FIG. 14.

For single-tile tile groups, additional Y-splits may be implemented (e.g. as described above) and this may be implemented when determining the amount of allocation (in blocks 1306 and 1406), i.e. when determining the size of the pre-fetch buffer.

When allocating slots in the on-chip memory to layer groups, a list of layer groups which cannot be allocated the same slot, is used. This list may be referred to as the 'exclusive list'. Where input pre-fetching is used there are two, different exclusive lists because of the more temporary nature of the pre-fetched input data.

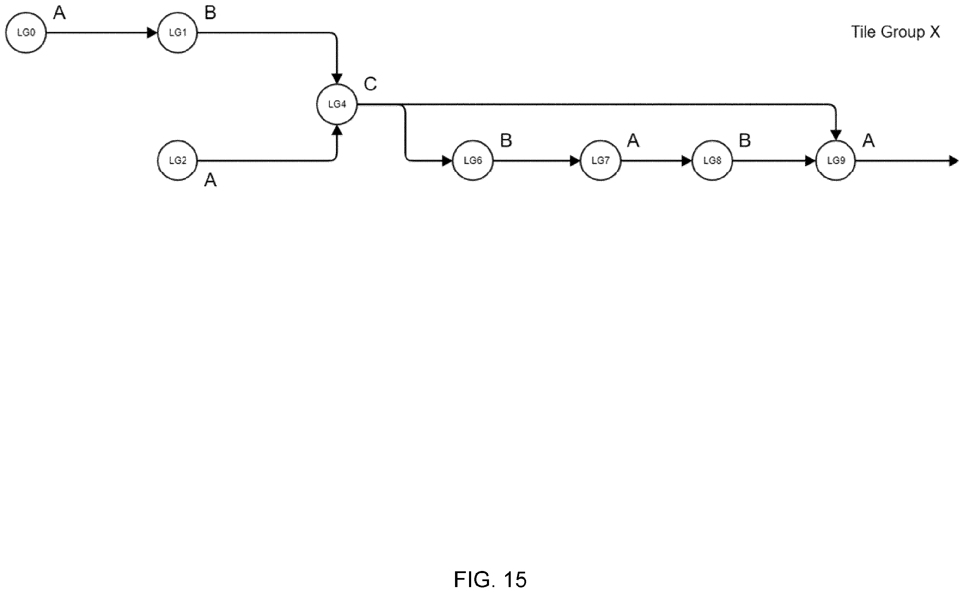

When allocating slots for the output data for a particular layer group, the exclusive list comprises the layer groups with output buffers that have not been used when executing the particular layer group, the layer group itself and any layer groups that are executed while the output buffer from the particular layer group still exists. This can be described with reference to the example execution order shown in FIG. 15. Considering LG4 as the particular layer group, its exclusive list for output buffers comprises LG1 and LG2 (the layer groups with output buffers that have not been used when executing the particular layer group), LG4 (the layer group itself) and LG6, LG7, LG8 and LG9 (layer groups that are executed while the output buffer from the particular layer group still exists).

When allocating slots for the pre-fetch data for a particular layer group, the exclusive list comprises the layer groups with output buffers that have not been used when executing the particular layer group and the layer group itself. Any layer groups that are executed while the output buffer from the particular layer group still exists are not on the exclusive list because after the execution of the particular layer, its pre-fetch buffer allocation can be released. This can be described with reference to the example execution order shown in FIG. 15. Considering LG4 as the particular layer group, its exclusive list for pre-fetch buffers comprises LG1 and LG2 (the layer groups with output buffers that have not been used when executing the particular layer group) and LG4 (the layer group itself). However, the exclusive list does not include LG6, LG7, LG8 and LG9 (unlike the exclusive list for output buffers).

In order to keep the exclusive list for the pre-fetch data to a minimum, the input pre-fetch for a layer group may be performed one layer group ahead (e.g. immediately before execution of that layer group), rather than performing it during an earlier layer group.

Described above are various methods of mapping a neural network to hardware. Once generated using the methods described above, the mapped neural network may be stored in memory for execution on the hardware arrangement. The neural network that is mapped may be configured to perform any task when executed on the hardware. For example, the mapped neural network may perform image processing (e.g. image classification, image generation or image manipulation) when executed on the hardware.

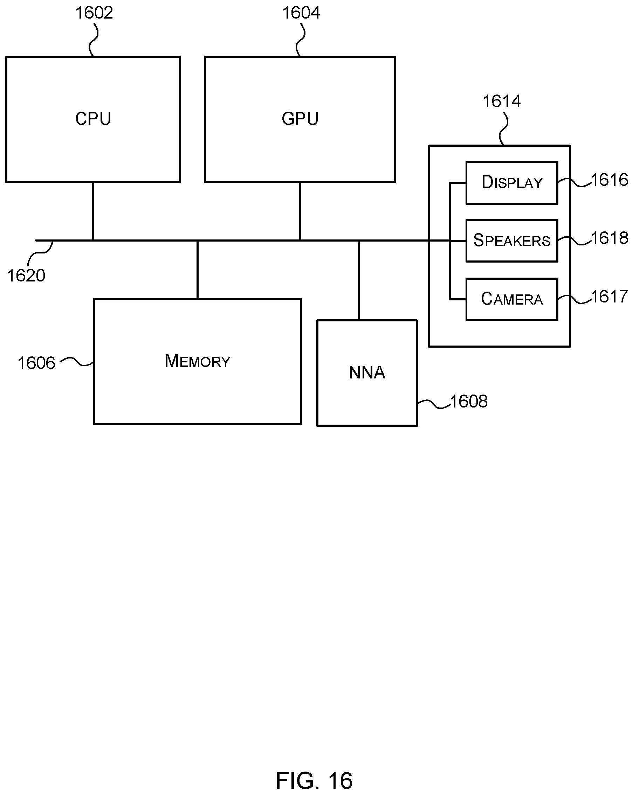

FIG. 16 shows a computer system in which the methods described herein may be implemented. The computer system comprises a CPU 1602, a GPU 1604, a memory 1606, a neural network accelerator (NNA) 1608 and other devices 1614, such as a display 1616, speakers 1618 and a camera 1617. The components of the computer system can communicate with each other via a communications bus 1620. The NNA 1608 may be configured to implement the pre-fetching as described herein and/or the CPU 1602 may be configured to perform the mapping of a NN to a predefined hardware arrangement (e.g. using the method of FIG. 13 or 14).

The computer system is shown as comprising a number of functional blocks. This is schematic only and is not intended to define a strict division between different logic elements of such entities. Each functional block may be provided in any suitable manner.

Generally, any of the functions, methods, techniques or components described above can be implemented in software, firmware, hardware (e.g., fixed logic circuitry), or any combination thereof. The terms "module," "functionality," "component", "element", "unit", "block" and "logic" may be used herein to generally represent software, firmware, hardware, or any combination thereof. In the case of a software implementation, the module, functionality, component, element, unit, block or logic represents program code that performs the specified tasks when executed on a processor. The algorithms and methods described herein could be performed by one or more processors executing code that causes the processor(s) to perform the algorithms/methods. Examples of a computer-readable storage medium include a random-access memory (RAM), read-only memory (ROM), an optical disc, flash memory, hard disk memory, and other memory devices that may use magnetic, optical, and other techniques to store instructions or other data and that can be accessed by a machine.

The terms computer program code and computer readable instructions as used herein refer to any kind of executable code for processors, including code expressed in a machine language, an interpreted language or a scripting language. Executable code includes binary code, machine code, bytecode, code defining an integrated circuit (such as a hardware description language or netlist), and code expressed in a programming language code such as C, Java or OpenCL. Executable code may be, for example, any kind of software, firmware, script, module or library which, when suitably executed, processed, interpreted, compiled, executed at a virtual machine or other software environment, cause a processor of the computer system at which the executable code is supported to perform the tasks specified by the code.

A processor, computer, or computer system may be any kind of device, machine or dedicated circuit, or collection or portion thereof, with processing capability such that it can execute instructions. A processor may be any kind of general purpose or dedicated processor, such as a CPU, GPU, System-on-chip, state machine, media processor, an application-specific integrated circuit (ASIC), a programmable logic array, a field-programmable gate array (FPGA), physics processing units (PPUs), radio processing units (RPUs), digital signal processors (DSPs), general purpose processors (e.g. a general purpose GPU), microprocessors, any processing unit which is designed to accelerate tasks outside of a CPU, etc. A computer or computer system may comprise one or more processors. Those skilled in the art will realize that such processing capabilities are incorporated into many different devices and therefore the term 'computer' includes set top boxes, media players, digital radios, PCs, servers, mobile telephones, personal digital assistants and many other devices.

It is also intended to encompass software which defines a configuration of hardware as described herein, such as HDL (hardware description language) software, as is used for designing integrated circuits, or for configuring programmable chips, to carry out desired functions. That is, there may be provided a computer readable storage medium having encoded thereon computer readable program code in the form of an integrated circuit definition dataset that when processed (i.e. run) in an integrated circuit manufacturing system configures the system to manufacture NN hardware comprising any apparatus described herein. An integrated circuit definition dataset may be, for example, an integrated circuit description.

Therefore, there may be provided a method of manufacturing, at an integrated circuit manufacturing system, a NNA configured to perform pre-fetching as described herein. Furthermore, there may be provided an integrated circuit definition dataset that, when processed in an integrated circuit manufacturing system, causes the method of manufacturing a NNA to be performed.

An integrated circuit definition dataset may be in the form of computer code, for example as a netlist, code for configuring a programmable chip, as a hardware description language defining an integrated circuit at any level, including as register transfer level (RTL) code, as high-level circuit representations such as Verilog or VHDL, and as low-level circuit representations such as OASIS (RTM) and GDSII. Higher level representations which logically define an integrated circuit (such as RTL) may be processed at a computer system configured for generating a manufacturing definition of an integrated circuit in the context of a software environment comprising definitions of circuit elements and rules for combining those elements in order to generate the manufacturing definition of an integrated circuit so defined by the representation. As is typically the case with software executing at a computer system so as to define a machine, one or more intermediate user steps (e.g. providing commands, variables etc.) may be required in order for a computer system configured for generating a manufacturing definition of an integrated circuit to execute code defining an integrated circuit so as to generate the manufacturing definition of that integrated circuit.

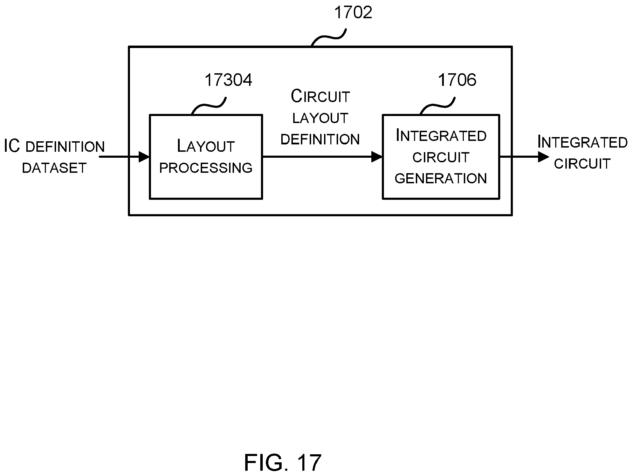

An example of processing an integrated circuit definition dataset at an integrated circuit manufacturing system so as to configure the system to manufacture a NNA will now be described with respect to FIG. 17.

FIG. 17 shows an example of an integrated circuit (IC) manufacturing system 1702 which is configured to manufacture a NNA configured to perform pre-fetching as described in any of the examples herein. In particular, the IC manufacturing system 1702 comprises a layout processing system 1004 and an integrated circuit generation system 1706. The IC manufacturing system 1702 is configured to receive an IC definition dataset (e.g. defining a NNA configured to perform pre-fetching as described in any of the examples herein), process the IC definition dataset, and generate an IC according to the IC definition dataset (e.g. which embodies a NNA as described in any of the examples herein). The processing of the IC definition dataset configures the IC manufacturing system 1702 to manufacture an integrated circuit embodying a NNA as described in any of the examples herein.

The layout processing system 1704 is configured to receive and process the IC definition dataset to determine a circuit layout. Methods of determining a circuit layout from an IC definition dataset are known in the art, and for example may involve synthesising RTL code to determine a gate level representation of a circuit to be generated, e.g. in terms of logical components (e.g. NAND, NOR, AND, OR, MUX and FLIP-FLOP components). A circuit layout can be determined from the gate level representation of the circuit by determining positional information for the logical components. This may be done automatically or with user involvement in order to optimise the circuit layout. When the layout processing system 1004 has determined the circuit layout it may output a circuit layout definition to the IC generation system 1706. A circuit layout definition may be, for example, a circuit layout description.

The IC generation system 1706 generates an IC according to the circuit layout definition, as is known in the art. For example, the IC generation system 1706 may implement a semiconductor device fabrication process to generate the IC, which may involve a multiple-step sequence of photo lithographic and chemical processing steps during which electronic circuits are gradually created on a wafer made of semiconducting material. The circuit layout definition may be in the form of a mask which can be used in a lithographic process for generating an IC according to the circuit definition. Alternatively, the circuit layout definition provided to the IC generation system 1706 may be in the form of computer-readable code which the IC generation system 1706 can use to form a suitable mask for use in generating an IC.

The different processes performed by the IC manufacturing system 1702 may be implemented all in one location, e.g. by one party. Alternatively, the IC manufacturing system 1002 may be a distributed system such that some of the processes may be performed at different locations, and may be performed by different parties. For example, some of the stages of: (i) synthesising RTL code representing the IC definition dataset to form a gate level representation of a circuit to be generated, (ii) generating a circuit layout based on the gate level representation, (iii) forming a mask in accordance with the circuit layout, and (iv) fabricating an integrated circuit using the mask, may be performed in different locations and/or by different parties.

In other examples, processing of the integrated circuit definition dataset at an integrated circuit manufacturing system may configure the system to manufacture a NNA without the IC definition dataset being processed so as to determine a circuit layout. For instance, an integrated circuit definition dataset may define the configuration of a reconfigurable processor, such as an FPGA, and the processing of that dataset may configure an IC manufacturing system to generate a reconfigurable processor having that defined configuration (e.g. by loading configuration data to the FPGA).

In some embodiments, an integrated circuit manufacturing definition dataset, when processed in an integrated circuit manufacturing system, may cause an integrated circuit manufacturing system to generate a device as described herein. For example, the configuration of an integrated circuit manufacturing system in the manner described above with respect to FIG. 17 by an integrated circuit manufacturing definition dataset may cause a device as described herein to be manufactured.

In some examples, an integrated circuit definition dataset could include software which runs on hardware defined at the dataset or in combination with hardware defined at the dataset. In the example shown in FIG. 17, the IC generation system may further be configured by an integrated circuit definition dataset to, on manufacturing an integrated circuit, load firmware onto that integrated circuit in accordance with program code defined at the integrated circuit definition dataset or otherwise provide program code with the integrated circuit for use with the integrated circuit.

Those skilled in the art will realize that storage devices utilized to store program instructions can be distributed across a network. For example, a remote computer may store an example of the process described as software. A local or terminal computer may access the remote computer and download a part or all of the software to run the program. Alternatively, the local computer may download pieces of the software as needed, or execute some software instructions at the local terminal and some at the remote computer (or computer network). Those skilled in the art will also realize that by utilizing conventional techniques known to those skilled in the art that all, or a portion of the software instructions may be carried out by a dedicated circuit, such as a DSP, programmable logic array, or the like.

The methods described herein may be performed by a computer configured with software in machine readable form stored on a tangible storage medium e.g. in the form of a computer program comprising computer readable program code for configuring a computer to perform the constituent portions of described methods or in the form of a computer program comprising computer program code means adapted to perform all the steps of any of the methods described herein when the program is run on a computer and where the computer program may be embodied on a computer readable storage medium. Examples of tangible (or non-transitory) storage media include disks, thumb drives, memory cards etc. and do not include propagated signals. The software can be suitable for execution on a parallel processor or a serial processor such that the method steps may be carried out in any suitable order, or simultaneously.

The hardware components described herein may be generated by a non-transitory computer readable storage medium having encoded thereon computer readable program code.

Memories storing machine executable data for use in implementing disclosed aspects can be non-transitory media. Non-transitory media can be volatile or non-volatile. Examples of volatile non-transitory media include semiconductor-based memory, such as SRAM or DRAM. Examples of technologies that can be used to implement non-volatile memory include optical and magnetic memory technologies, flash memory, phase change memory, resistive RAM.

A particular reference to "logic" refers to structure that performs a function or functions. An example of logic includes circuitry that is arranged to perform those function(s). For example, such circuitry may include transistors and/or other hardware elements available in a manufacturing process. Such transistors and/or other elements may be used to form circuitry or structures that implement and/or contain memory, such as registers, flip flops, or latches, logical operators, such as Boolean operations, mathematical operators, such as adders, multipliers, or shifters, and interconnect, by way of example. Such elements may be provided as custom circuits or standard cell libraries, macros, or at other levels of abstraction. Such elements may be interconnected in a specific arrangement. Logic may include circuitry that is fixed function and circuitry can be programmed to perform a function or functions; such programming may be provided from a firmware or software update or control mechanism. Logic identified to perform one function may also include logic that implements a constituent function or sub-process. In an example, hardware logic has circuitry that implements a fixed function operation, or operations, state machine or process.

The implementation of concepts set forth in this application in devices, apparatus, modules, and/or systems (as well as in methods implemented herein) may give rise to performance improvements when compared with known implementations. The performance improvements may include one or more of increased computational performance, reduced latency, increased throughput, and/or reduced power consumption. During manufacture of such devices, apparatus, modules, and systems (e.g. in integrated circuits) performance improvements can be traded-off against the physical implementation, thereby improving the method of manufacture. For example, a performance improvement may be traded against layout area, thereby matching the performance of a known implementation but using less silicon. This may be done, for example, by reusing functional blocks in a serialised fashion or sharing functional blocks between elements of the devices, apparatus, modules and/or systems. Conversely, concepts set forth in this application that give rise to improvements in the physical implementation of the devices, apparatus, modules, and systems (such as reduced silicon area) may be traded for improved performance. This may be done, for example, by manufacturing multiple instances of a module within a predefined area budget."

Any range or device value given herein may be extended or altered without losing the effect sought, as will be apparent to the skilled person.

It will be understood that the benefits and advantages described above may relate to one embodiment or may relate to several embodiments. The embodiments are not limited to those that solve any or all of the stated problems or those that have any or all of the stated benefits and advantages.

Any reference to 'an' item refers to one or more of those items. The term 'comprising' is used herein to mean including the method blocks or elements identified, but that such blocks or elements do not comprise an exclusive list and an apparatus may contain additional blocks or elements and a method may contain additional operations or elements. Furthermore, the blocks, elements and operations are themselves not impliedly closed.

The steps of the methods described herein may be carried out in any suitable order, or simultaneously where appropriate. The arrows between boxes in the figures show one example sequence of method steps but are not intended to exclude other sequences or the performance of multiple steps in parallel. Additionally, individual blocks may be deleted from any of the methods without departing from the spirit and scope of the subject matter described herein. Aspects of any of the examples described above may be combined with aspects of any of the other examples described to form further examples without losing the effect sought. Where elements of the figures are shown connected by arrows, it will be appreciated that these arrows show just one example flow of communications (including data and control messages) between elements. The flow between elements may be in either direction or in both directions.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein. In view of the foregoing description it will be evident to a person skilled in the art that various modifications may be made within the scope of the invention.

## Claims

**1.** A method for implementing a neural network in hardware, the neural network comprising a plurality of layers, wherein the layers are grouped into a plurality of layer groups, each layer group comprising one or more layers of the neural network that are processed in a single pass through the hardware and the layer groups are grouped into a plurality of tile groups, each tile group comprising a set of layer groups that are evaluated when executing the neural network, the method comprising:
pre-fetching (406, 407, 412, 416-422, 502-506, 604, 606, 706, 707, 712, 804, 902, 1002-1006, 1102-1106) a portion of the input data for a first layer group (402, 602, 702, 806) in a tile group (404, 704) into a buffer slot in on-chip memory (104); and
subsequently releasing the buffer slot after output data for the first layer group has been written to memory.

**2.** The method according to claim 1, wherein the pre-fetching is performed selectively, wherein pre-fetching of the input data for the first layer group in the tile group is performed if implementing the neural network would result in the input data for the first layer group in the tile group being read from the off-chip memory a requisite number of times and the requisite number of times is equal to or more than a threshold number of times and wherein the buffer slot is subsequently released after the input data for the first layer group in the tile group has been read the requisite number of times.

**2.** The method according to claim 1, wherein:
the portion of the input data is pre-fetched prior to execution of the first layer group; or
the pre-fetching of the portion of the input data starts prior to execution of the first layer group and finishes during execution of the first layer group.

**3.** The method according to claim 1, wherein the portion of the input data is pre-fetched during execution of a layer group preceding the first layer group.

**4.** The method according to claim 3, wherein the layer preceding the first layer group is a last layer group (408, 708) in a preceding tile group (410, 710).

**5.** The method according to claim 1, wherein input data for the first layer group is subdivided into a plurality of blocks, the portion of the input data comprises a first block and is pre-fetched prior to execution of the first layer group or during execution of a layer group preceding the first layer group.

**6.** The method according to claim 5, further comprising:
pre-fetching a second block of the input data for the first layer group in the tile group into a second buffer slot in on-chip memory, wherein the second block is prefetched prior to execution of the first layer group for the second block of the input data or is prefetched during execution of a layer group in the tile group for the first block of the input data; and
subsequently releasing the second buffer slot after output data for the first layer group and the second block of the input data has been written to memory.

**7.** The method according to claim 1, wherein input data for the first layer group is subdivided into a plurality of blocks, the portion of the input data comprises a second or subsequent block of the plurality of blocks and the portion of the input data is pre-fetched prior to execution of the first layer group with the portion of the input data or during execution of a layer group in the tile group for a preceding block of the plurality of blocks.

**8.** The method according to claim 1, wherein the hardware comprises a plurality of cores and the input data for the first layer group is subdivided into a plurality of blocks, the portion of the input data comprises a first block for each of the plurality of cores and is pre-fetched prior to execution of the first layer group or during execution of a layer group preceding the first layer group.

**9.** The method according to claim 8, further comprising:
pre-fetching a second block of the input data for each of the plurality of cores for the first layer group in the tile group into a second buffer slot in on-chip memory, wherein the second block for each of the plurality of cores is prefetched prior to execution of the first layer group for the second block of the input data for each of the plurality of cores or is prefetched during execution of a layer group in the tile group for the first blocks of the input data; and
subsequently releasing the second buffer slot after output data for the first layer group and the second blocks of the input data has been written to memory.

**10.** The method according to claim 1, wherein the hardware comprises a plurality of cores and input data for the first layer group is subdivided into a plurality of blocks, the portion of the input data comprises a second or subsequent block of the plurality of blocks for each of the plurality of cores and the portion of the input data is pre-fetched prior to execution of the first layer group with the portion of the input data or during execution of a layer group in the tile group for a preceding block of the plurality of blocks.

**11.** A neural network accelerator (1608) configured to implement a neural network in hardware, the neural network comprising a plurality of layers, wherein the layers are grouped into a plurality of layer groups, each layer group comprising one or more layers of the neural network that are processed in a single pass through the hardware and the layer groups are grouped into a plurality of tile groups, each tile group comprising a set of layer groups that are evaluated when executing the neural network, the neural network accelerator comprising:
on-chip memory;
hardware logic arranged to pre-fetch (406, 407, 412, 416-422, 502-506, 604, 606, 706, 707, 712, 804, 902, 1002-1006, 1102-1106) a portion of the input data for a first layer group (402, 602, 702, 806) in a tile group (404, 704) into a buffer slot in the on-chip memory (104); and
hardware logic arranged to subsequently release the buffer slot after output data for the first layer group has been written to memory.

**12.** A neural network accelerator (1608) configured to perform the method of any of claims 1-10.

**13.** The neural network accelerator of claim 11 or 12, wherein the neural network accelerator is embodied in hardware on an integrated circuit.

**14.** Computer readable code configured to cause the method of any of claims 1-10 to be performed when the code is run.

**15.** A computer readable storage medium having encoded thereon the computer readable code of claim 14.
